# FASCICULE DE BREVET EUROPEEN

(11) **EP 1 096 685 B1**
(45) Date de publication et mention de la délivrance du brevet: **21.04.2004**
(21) Numéro de dépôt: 00402963.3
(22) Date de dépôt: 25.10.2000
(51) Int. Cl.: H03L 7/091, G11B 7/003, G11B 20/10, G11B 7/00, H04L 7/033

(54) **Dispositif électronique de calcul du déphasage mutuel de deux signaux incidents échantillonnés**
Elektronische Vorrichtung zur Berechnung der gegenseitigen Phasenabweichung zwischen zwei abgetasteten Fehlersignalen
Electronic device for mutual phase-shift calculation of two sampled failure-signals

(30) Priorité: 28.10.1999 FR 9913524
(43) Date de publication de la demande: 02.05.2001
(73) Titulaire: STMicroelectronics S.A., 92120 Montrouge (FR)
(72) Inventeur: Lebowsky, Fritz, 38410 Corps d'Uriage (FR); Marrec, Sonia, 38240 Meylan (FR); Chelal, Rabah, 38000 Grenoble (FR)
(74) Mandataire: Dossmann, Gérard

(56) Documents cités:
- EP-A- 0 109 837
- EP-A- 0 138 274
- EP-A- 0 241 974
- EP-A- 0 430 541
- WO-A-98/47136
- US-A- 4 845 574
- PATENT ABSTRACTS OF JAPAN vol. 014, no. 009 (E-870), 10 janvier 1990 (1990-01-10) & JP 01 255338 A (HITACHI LTD), 12 octobre 1989 (1989-10-12)

## Description

L'invention concerne le calcul du déphasage mutuel de deux signaux incidents échantillonnés.

L'invention s'applique avantageusement mais non limitativement au domaine des disques numériques, notamment ceux connus sous le vocable de "disques compacts" (CD-ROM Read Only Memory Compact Disc en langue anglaise) et tout particulièrement les disques numériques multifonctions (DVD : "Digital Versatile disc" en langue anglaise) stockant de façon comprimée des données d'image.

L'invention permet ainsi en particulier de détecter un déphasage éventuel entre deux signaux incidents échantillonnés issus de photodétecteurs, déphasage qui correspond à l'erreur de positionnement d'un faisceau optique incident, par exemple un spot laser, illuminant la piste du disque numérique. Cette erreur de positionnement est alors utilisée classiquement dans une boucle d'asservissement pour modifier le système optique incident et ramener et asservir le faisceau optique sur la piste.

D'une façon plus générale, la détermination du déphasage mutuel entre deux signaux incidents échantillonnés nécessite classiquement l'utilisation de plusieurs mémoires du type "premier entré - premier sorti" (First in - First out : FIFO en langue anglaise) pour stocker successivement un certain nombre d'échantillons des signaux reçus, ainsi qu'un système de gestion relativement complexe permettant de repérer les instants temporels d'apparition des transitions.

L'invention vise à proposer une solution matérielle extrêmement simple pour calculer le déphasage mutuel de deux signaux incidents échantillonnés.

L'invention propose donc un dispositif électronique de calcul du déphasage mutuel de deux signaux incidents échantillonnés.

Selon l'invention, ce dispositif comprend un étage de détection apte à détecter les transitions de chaque signal incident par rapport à un seuil de franchissement prédéterminé, par exemple la valeur 0, et également apte à détecter les échantillons dits "minimum" de ce signal, c'est-à-dire les échantillons dont les niveaux sont inférieurs à un seuil bas prédéterminé, ainsi que les échantillons dits "maximum", c'est-à-dire ceux dont les niveaux sont supérieurs à un seuil haut prédéterminé.

Le dispositif comprend également une première paire de blocs associés à un premier signal incident et une deuxième paire de blocs associés au deuxième signal incident. En fait, en pratique, le premier bloc de chaque paire peut être par exemple affecté aux évolutions "montantes" du signal correspondant, tandis que le deuxième bloc de chaque paire sera alors associé aux évolutions "descendantes" du signal incident correspondant.

Chaque bloc comporte des éléments de mémorisation (par exemple une mémoire ou des éléments de mémoire ou des registres ou encore des bascules D) aptes à stocker les niveaux (amplitudes) d'un jeu prédéterminé d'échantillons du signal incident correspondant. Ce jeu prédéterminé d'échantillons comporte au moins un échantillon minimum, un échantillon maximum, et deux échantillons intermédiaires représentatifs d'une transition du signal incident temporellement située entre ces échantillons minimum et maximum. En fait, comme on le verra plus en détail ci-après, il est préférable que chaque jeu comprenne en outre également une paire d'échantillons intermédiaires supplémentaires, de sorte que la paire d'échantillons intermédiaires soit représentative de la première transition détectée du signal incident correspondant, tandis que la paire d'échantillons intermédiaires supplémentaires sera alors représentative de la dernière transition détectée du signal incident, en particulier dans le cas d'oscillations du signal entre les échantillons minimum et maximum.

Chaque bloc comporte également des premier, deuxième et troisième compteurs temporels cadencés par le signal d'horloge d'échantillonnage et respectivement associés aux échantillons minimum, maximum et à l'un des échantillons intermédiaires.

Le dispositif selon l'invention comporte par ailleurs des moyens de contrôle, pouvant être par exemple réalisés de façon logicielle au sein d'un microprocesseur, ou bien sous forme de circuit logique à partir d'outils de synthèse logique. Ces moyens de contrôle sont aptes, en présence de deux échantillons minimum ou de deux échantillons maximum, respectivement relatifs aux deux signaux incidents, à stocker le premier jeu d'échantillons relatifs au premier signal dans l'un des blocs de la première paire (par exemple dans le premier bloc de la première paire si l'on est en présence d'un échantillon minimum ou bien dans le deuxième bloc de la première paire si l'on est en présence d'un échantillon maximum) et le premier jeu d'échantillons relatifs au deuxième signal dans le bloc homologue de la deuxième paire (c'est-à-dire également le premier bloc de la deuxième paire si l'on est en présence pour ce deuxième signal également d'un échantillon minimum ou bien le deuxième bloc de la deuxième paire si l'on est en présence également pour ce signal incident d'un échantillon maximum). Les moyens de contrôle sont alors aptes à stocker les jeux suivants successifs d'échantillons de chaque signal incident alternativement et successivement dans les deux blocs de chaque paire en commençant par l'autre bloc de chaque paire (c'est-à-dire le deuxième bloc de chaque paire si le premier jeu d'échantillons relatifs à chaque signal incident a été stocké dans le premier bloc).

Les moyens de contrôle sont par ailleurs aptes à initialiser le compteur temporel associé à l'échantillon stocké. En d'autres termes, lorsque l'échantillon minimum est stocké dans l'élément de mémorisation correspondant du bloc, le premier compteur temporel est initialisé. Lorsque, par exemple, le deuxième échantillon intermédiaire est détecté et stocké, le troisième compteur temporel est initialisé puis, lorsqu'un échantillon maximum est détecté et stocké, c'est le deuxième compteur temporel qui est initialisé.

Les moyens de contrôle sont également aptes à délivrer un signal logique dit de validation de bloc, lorsque le jeu correspondant d'échantillons a été totalement stocké dans les éléments de mémorisation du bloc. En d'autres termes, lorsque tous les éléments de mémorisation sont remplis, il y a émission du signal de validation. En pratique, ce signal de validation peut être un signal logique qui garde par exemple la valeur 0 tant que le bloc n'est pas rempli et qui prend la valeur 1 lorsque tous les échantillons du jeu ont été stockés.

Le dispositif selon l'invention comporte également des moyens de post-traitement, pouvant être également réalisés de façon logicielle au sein d'un microcontrôleur ou d'un microprocesseur ou encore sous forme de circuit logique à partir d'outils de synthèse logique. Les moyens de post-traitement vont pouvoir déterminer le déphasage des deux signaux incidents lorsque deux signaux de validation de blocs relatifs à deux blocs homologues des deux paires sont émis. Et, les moyens de post-traitement vont déterminer ce déphasage au moins à partir des valeurs des troisièmes compteurs temporels de ces deux blocs, c'est-à-dire les valeurs des compteurs associés aux échantillons intermédiaires (transition), et des niveaux des échantillons intermédiaires stockés dans ces deux blocs. En d'autres termes, à chaque fois que deux blocs homologues seront déclarés pleins, que ce soit par exemple les deux premiers ou les deux seconds de chaque paire, le déphasage va pouvoir être déterminé à partir du contenu de ces blocs.

Selon un mode de réalisation de l'invention, les moyens de post-traitement comportent des moyens de stockage, par exemple des registres. En présence de deux signaux de validation de blocs relatifs à deux blocs homologues des deux paires, les moyens de contrôle transfèrent le contenu des deux blocs homologues dans les moyens de stockage, les moyens de post-traitement déterminant alors le déphasage à partir du contenu des moyens de stockage. Ceci permet notamment de pouvoir calculer le déphasage en temps différé, indépendamment du cycle de stockage rebouclé dans les blocs, puisque les valeurs des compteurs sont figées dans les moyens de stockage des moyens de post-traitement.

Les moyens de post-traitement effectuent avantageusement un contrôle de validité du calcul de déphasage, ce contrôle de validité comportant une comparaison entre la valeur du premier compteur temporel de l'un des blocs (c'est-à-dire la valeur du compteur temporel associée à l'échantillon maximum) et la valeur du deuxième compteur temporel de l'autre bloc (c'est-à-dire la valeur du compteur temporel associée à l'échantillon minimum). Ainsi, afin notamment de ne pas calculer le déphasage pour des signaux qui seraient trop fortement déphasés, par exemple en opposition de phase, il conviendra de s'assurer par exemple que le compteur associé à l'échantillon maximum d'un signal reste inférieur au compteur associé à l'échantillon minimum de l'autre signal, pour le cas d'une configuration montante. Dans le cas d'une configuration descendante, le compteur temporel associé à l'échantillon maximum d'un signal devra rester supérieur au compteur associé à l'échantillon minimum de l'autre signal.

Afin notamment de prendre en compte des oscillations de l'un et/ou l'autre des signaux incidents entre leurs échantillons minimum et maximum, il est préférable que chaque bloc comporte deux éléments de mémorisations élémentaires supplémentaires aptes à stocker le cas échéant une paire d'échantillons intermédiaires supplémentaires représentatifs d'une transition finale du signal incident située entre les échantillons minimum et maximum. Les deux échantillons intermédiaires sont alors représentatifs de la première transition détectée. Dans ce cas, chaque bloc comporte un quatrième compteur temporel associé à l'un de ces échantillons intermédiaires supplémentaires. Et, les moyens de post-traitement utilisent, pour calculer le déphasage entre les deux signaux incidents, soit la valeur du troisième compteur temporel associée à la paire d'échantillons intermédiaires (c'est-à-dire qu'ils prennent en compte la transition initiale), soit la valeur du quatrième compteur temporel associée à la paire d'échantillons intermédiaires supplémentaires (c'est-à-dire qu'ils prennent en compte la transition finale), et ce en fonction du rapport entre d'une part la différence entre les valeurs des premiers compteurs temporels associés aux deux blocs homologues, (c'est-à-dire l'écart temporel entre les deux échantillons maximum des deux signaux incidents), et d'autre part la différence entre les valeurs des deuxièmes compteurs temporels associés aux deux blocs homologues (c'est-à-dire l'écart temporel entre les deux échantillons minimum).

L'invention a également pour objet un lecteur de disque numérique, en particulier de disque DVD, comprenant une tête optique comportant un moyen d'émission d'un faisceau lumineux incident et plusieurs photodétecteurs pour détecter la réflexion du faisceau lumineux sur le disque, des moyens pour sommer deux à deux les signaux issus des photodétecteurs et délivrer deux signaux incidents échantillonnés, et des moyens de calcul de déphasage mutuel des deux signaux incidents échantillonnés. Les moyens de calcul incorporent alors un dispositif tel que celui défini ci-avant.

D'autres avantages et caractéristiques de l'invention apparaîtront à l'examen de la description détaillée de modes de réalisation, nullement limitatifs, et des dessins annexés, sur lesquels :
- la figure 1 illustre un synoptique schématique partiel de l'architecture interne d'un lecteur de disque numérique, en particulier de disque DVD, incorporant un dispositif de calcul de déphasage selon l'invention;
- la figure 2 illustre plus en détail, mais toujours de façon schématique, un mode de réalisation d'un dispositif selon l'invention, qui peut être incorporé dans le lecteur de disque de la figure 1;
- la figure 3 illustre schématiquement deux signaux incidents échantillonnés traités par le dispositif selon l'invention;
- la figure 4 illustre plus en détail mais toujours de façon très schématique l'architecture interne d'un bloc utilisé dans le dispositif de la figure 2;
- la figure 5 illustre de façon très schématique un mode de fonctionnement du dispositif de la figure 2; et
- les figures 6 à 8 illustrent différents cas possibles de signaux incidents échantillonnés susceptibles d'être traités par le dispositif selon l'invention.

Bien que l'invention n'y soit pas limitée, on va maintenant décrire un mode de mise en oeuvre de celle-ci dans le cadre d'un lecteur de disque numérique, en particulier un lecteur de disque DVD.

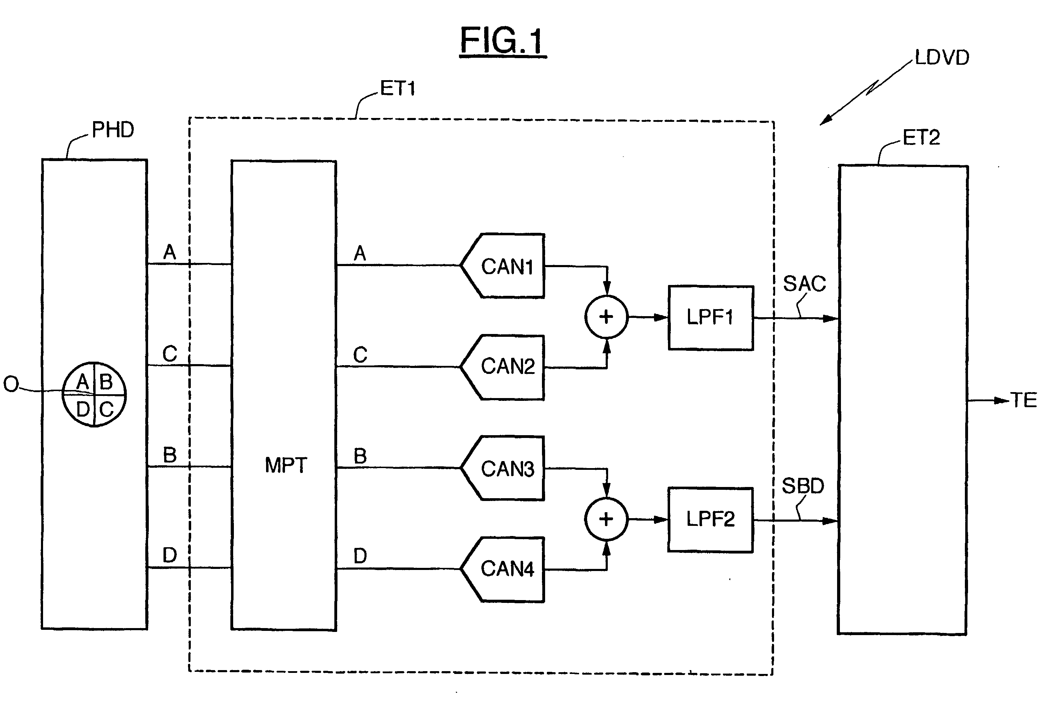

Sur la figure 1, la référence LDVD désigne plus particulièrement un lecteur de disque DVD dont on n'a représenté ici que certains éléments utiles pour décrire un mode de réalisation du dispositif de calcul de déphasage, dans le cadre de cette application.

La référence PHD désigne un capteur optique composé de quatre photodétecteurs A, B, C, D. En pratique, une diode laser émet un faisceau laser qui est dirigé vers la face du disque, sur laquelle est gravée la piste contenant les informations, par l'intermédiaire notamment d'une lame séparatrice et d'un système optique classique. Le faisceau réfléchi par le disque traverse alors dans l'autre sens la lame séparatrice et est capté par les quatre photodétecteurs A, B, C, D qui se situent tous les quatre dans un plan parallèle au plan du disque. Chaque photodétecteur délivre un signal que l'on a référencé, à des fins de simplification, par la même lettre que celle affectée au photodétecteur. Ces signaux élémentaires A, B, C, D sont ensuite traités dans un premier étage de traitement ET comprenant en tête un module de traitement préliminaire MPT comportant notamment des amplificateurs, ce module MPT étant de structure connue en soi.

Ces signaux A, C, B, D délivrés par le module MPT sont ensuite échantillonnés dans quatre convertisseurs analogiques numériques CAN1-CAN4. Le signal d'horloge d'échantillonnage CKE est délivré par exemple par un quartz (non représenté ici à des fins de simplification). La fréquence du signal d'échantillonnage est par exemple égale à 120 MHz.

On somme ensuite, dans deux additionneurs, les deux signaux élémentaires qui sont issus des deux photodétecteurs symétriques par rapport au centre haut du capteur. Ainsi, l'un des signaux secondaires est égal à la somme des signaux élémentaires A et C, tandis que l'autre signal secondaire est égal à la somme des signaux élémentaires B et D.

Les signaux sommés sont ensuite filtrés respectivement dans deux filtres passe-bas de structure identique LPF1 et LPF2. L'étage de traitement fournit donc deux signaux incidents échantillonnés SAC et SBD, dont le déphasage mutuel est représentatif de l'erreur de positionnement du faisceau optique par rapport à la piste du disque. Ces deux signaux échantillonnés SAC et SBD vont être traités par le dispositif de calcul de déphasage selon l'invention, incorporé dans l'étage ET2, ce dernier délivrant une erreur de positionnement TE qui va être classiquement utilisée dans une boucle d'asservissement pour modifier le système optique incident et ramener et asservir le faisceau optique sur la piste du disque.

Par ailleurs, l'homme du métier sait que le capteur optique formé des photodétecteurs délivre outre les quatre signaux élémentaires, un signal global, ou signal utile, égal à la somme des quatre signaux élémentaires, signal utile d'où l'on extrait les informations binaires lues sur la piste. Les moyens de traitement qui permettent d'extraire les données codées et qui font classiquement partie d'un lecteur de disque numérique, ne sont pas représentés ici à des fins de simplification.

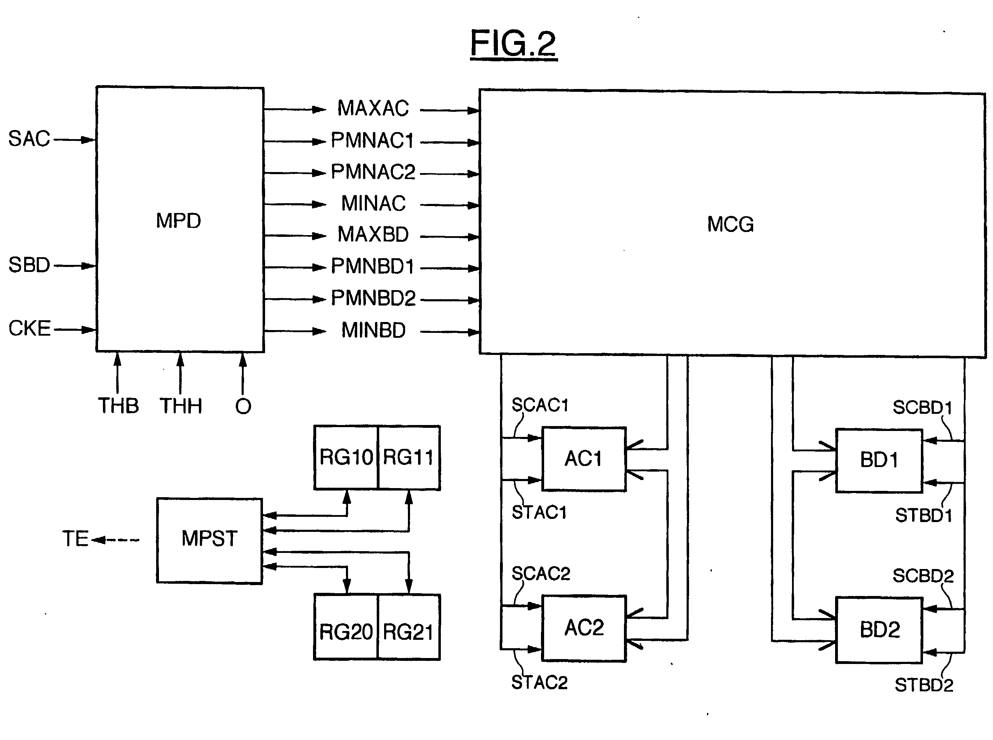

Sur la figure 2, qui illustre un exemple d'architecture d'un dispositif électronique de calcul du déphasage selon l'invention, la référence MPD désigne un étage de détection apte à détecter les transitions de chaque signal incident SAC, SBD par rapport à un seuil de franchissement prédéterminé SE, par exemple la valeur 0. Cet étage de détection permet également de détecter les échantillons dits "minimum" de ce signal, c'est-à-dire ceux dont les niveaux sont inférieurs à un seuil bas prédéterminé THB, et les échantillons dits "maximum" dont les niveaux sont supérieurs à un seuil haut prédéterminé THH.

Matériellement, l'étage de détection MPD comporte par exemple des comparateurs permettant de comparer chaque échantillon d'un signal incident au seuil THH et au seuil THB. La référence MAXAC désigne un échantillon maximum du signal SAC, c'est-à-dire un échantillon dont le niveau est supérieur au seuil THH. La référence MINAC désigne un échantillon minimum du signal SAC, c'est-à-dire un échantillon dont le niveau est inférieur au seuil bas THB.

Par ailleurs, afin de détecter les transitions par rapport au seuil de franchissement SE pris égal à 0, l'étage de détection peut comporter deux registres en série stockant respectivement et séquentiellement deux échantillons consécutifs du signal incident. L'étage de détection détecte alors le changement de signe entre les deux échantillons stockés. Un tel changement de signe détecté est représentatif d'une transition. Dans ce cas, ces deux échantillons représentatifs d'une transition sont dits "échantillons intermédiaires" et sont référencés PMNAC1 et PMNAC2 pour le signal SAC.

Ce qui vient d'être décrit pour le signal SAC s'applique bien évidemment pour le signal SBD. Plus précisément, la référence MAXBD désigne un échantillon maximum du signal SBD, la référence MINBD désigne un échantillon minimum du signal SBD et les références PMNBD1 et PMNBD2 désignent deux échantillons intermédiaires représentatifs d'une transition du signal SBD par rapport au seuil de franchissement SE (=0).

Ces divers échantillons sont délivrés à des moyens de contrôle MCG dont on va décrire ci-après le fonctionnement plus en détail et qui, d'une façon générale, commandent deux paires de blocs respectivement dédiés aux deux signaux incidents SAC et SBD. Plus précisément, la première paire de blocs, formée du premier bloc AC1 et du deuxième bloc AC2, est dédiée au signal SAC, tandis que la deuxième paire de blocs, formée du premier bloc BD1 et du deuxième bloc BD2, est dédiée au deuxième signal incident SBD.

L'un des blocs de chaque paire est dédié aux évolutions montantes du signal correspondant, tandis que l'autre bloc de ladite paire est relié aux évolutions descendantes du signal correspondant. Une évolution montante d'un signal se traduit par l'apparition séquentielle d'un échantillon minimum de ce signal jusqu'à l'obtention d'un échantillon maximum pour ce même signal en passant par l'obtention d'une, voire de plusieurs transitions du signal, situées temporellement entre ces deux échantillons minimum et maximum.

De même, une évolution descendante d'un signal se traduit par l'apparition séquentielle d'un échantillon maximum de ce signal jusqu'à l'obtention d'un échantillon minimum de ce signal en passant par l'obtention d'une, voire de plusieurs transitions de ce signal, temporellement situées entre ces échantillons maximum et minimum.

Au sens de la présente invention, deux blocs respectivement situés dans les deux paires de blocs sont dits "homologues" s'ils sont dédiés tous les deux à la même configuration du signal, c'est-à-dire soit tous les deux à la configuration montante du signal correspondant, soit à la configuration descendante du signal correspondant.

Plus précisément, dans l'exemple qui est décrit ici, on suppose que le premier bloc AC1 de la première paire est dédié aux configurations montantes du signal SAC, tandis que le deuxième bloc AC2 de cette première paire est dédié aux configurations descendantes du signal SAC. De même, on suppose que le premier bloc BD1 de la deuxième paire est dédié aux configurations montantes du signal SBD, tandis que le deuxième bloc BD2 de cette deuxième paire est dédié aux configurations descendantes du signal SBD. Par conséquent, les blocs AC1 et BD1 sont dits "homologues", tandis que les blocs AC2 et BD2 sont dits également homologues.

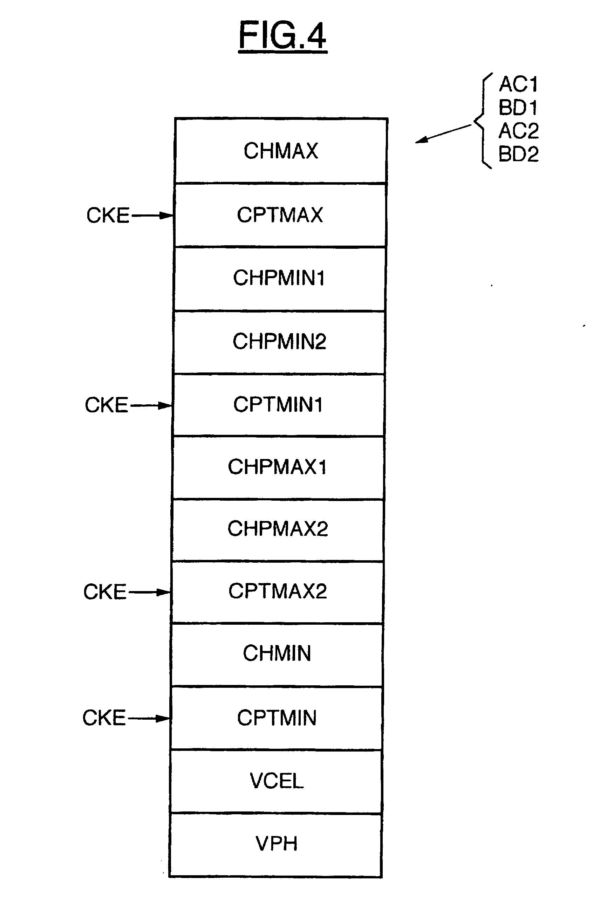

Matériellement, comme illustré très schématiquement sur la figure 4, chaque bloc AC1, BD1, AC2 ou BD2 comporte une cellule-mémoire et des compteurs temporels cadencés par le signal d'horloge CKE, c'est-à-dire s'incrémentant d'une unité à chaque front montant du signal CKE. La cellule de mémorisation comporte différents champs-mémoire, ou éléments de mémorisation, référencés CHMIN, CHMAX, CHPMIN1, CHPMIN2, CHPMAX1 et CHPMAX2. L'élément de mémorisation CHMIN est destiné à stocker tout échantillon minimum du signal correspondant, tandis que l'élément de mémorisation CHMAX est destiné à stocker tout échantillon maximum du signal incident correspondant. Les deux éléments de mémorisation CHPMIN1 et CHPMIN2 sont respectivement destinés à stocker les deux échantillons intermédiaires du signal incident représentatifs de la première transition détectée qui suit l'apparition d'un échantillon minimum dans le cas d'une configuration montante du signal ou l'apparition d'un échantillon maximum dans le cas d'une configuration descendante du signal.

Les éléments de mémorisation CHPMAX1 et CHPMAX2 sont quant à eux respectivement destinés à stocker deux échantillons intermédiaires supplémentaires respectivement représentatifs de la dernière transition ou transition finale détectée et située entre les échantillons minimum et maximum du signal correspondant. Ce stockage dans les éléments de mémorisation CHPMAX1 et CHPMAX2 n'est utilisé que lorsque le signal correspondant présente, comme on le verra plus en détail ci-après, une oscillation de part et d'autre du seuil de franchissement.

A cet égard, chaque bloc comporte également un élément de mémorisation VPH destiné à stocker un signal logique VPH qui prend par exemple la valeur 0 en l'absence d'échantillons intermédiaires supplémentaires stockés dans les champs CHPMAX1 et CHPMAX2 et qui prend la valeur 1 en présence de tels échantillons intermédiaires supplémentaires.

Les échantillons, respectivement stockés dans les éléments de mémorisation CHMAX, CHPMIN1, CHPMIN2 et CHMIN, constituent un jeu prédéterminé d'échantillons. Le bloc comporte par ailleurs un élément de mémorisation supplémentaire VCEL destiné à stocker un signal logique VCEL qui prend par exemple la valeur 0 tant que ce jeu d'échantillons n'a pas été totalement stocké dans les éléments de mémorisation du bloc. Par contre, dès que ce jeu d'échantillons a été stocké, le signal VCEL prend la valeur 1. On dit alors que le bloc est validé, le signal VCEL étant en fait un signal de validation de bloc lorsqu'il a la valeur 1. Bien entendu, il n'est pas nécessaire d'avoir des échantillons intermédiaires supplémentaires pour faire monter à 1 le signal de validation de bloc VCEL. Néanmoins, en présence d'une oscillation du signal incident, la montée à 1 du signal VCEL signifie implicitement que des échantillons intermédiaires supplémentaires ont été stockés dans les éléments de mémorisation CHPMAX1 et CHPMAX2.

A cette cellule de mémorisation sont associés quatre compteurs temporels CPTMIN, CPTMAX, CPTMIN1 et CPTMAX2.

Le premier compteur temporel CPTMIN est initialisé à une valeur initiale (par exemple 0) à chaque fois qu'un échantillon minimum est stocké dans l'élément de mémorisation CHMIN. De même, le deuxième compteur temporel CPTMAX est réinitialisé à 0 à chaque fois qu'un échantillon maximum est stocké dans l'élément de mémorisation CHMAX. Par analogie, le compteur CPTMIN2 est initialisé en présence du stockage de l'un des échantillons intermédiaires dans l'élément de mémorisation correspondant. L'initialisation de ce troisième compteur temporel CPTMIN1, qui est associé à l'un des échantillons intermédiaires, est donc représentative de l'apparition d'une transition. De même, le quatrième compteur temporel CPTMAX2 qui est associé à l'un des échantillons intermédiaires supplémentaires stocké dans l'un des éléments de mémorisation CHPMAX1 ou CHPMAX2, est initialisé lors du stockage de cet échantillon intermédiaire supplémentaire et est représentatif de l'apparition de ladite transition finale du signal.

Le contrôle de chaque bloc AC1, BD1, AC2, BD2, et notamment l'écriture dans les éléments de mémorisation ainsi que la montée à "1" des signaux logiques, est effectué par des signaux de contrôle qui sont référencés globalement SCAC1, SCBD1, SCAC2, SCBD2 sur la figure 2.

On va maintenant décrire plus en détail le fonctionnement du dispositif selon l'invention en se référant plus particulièrement aux figures 2, 3 et 5.

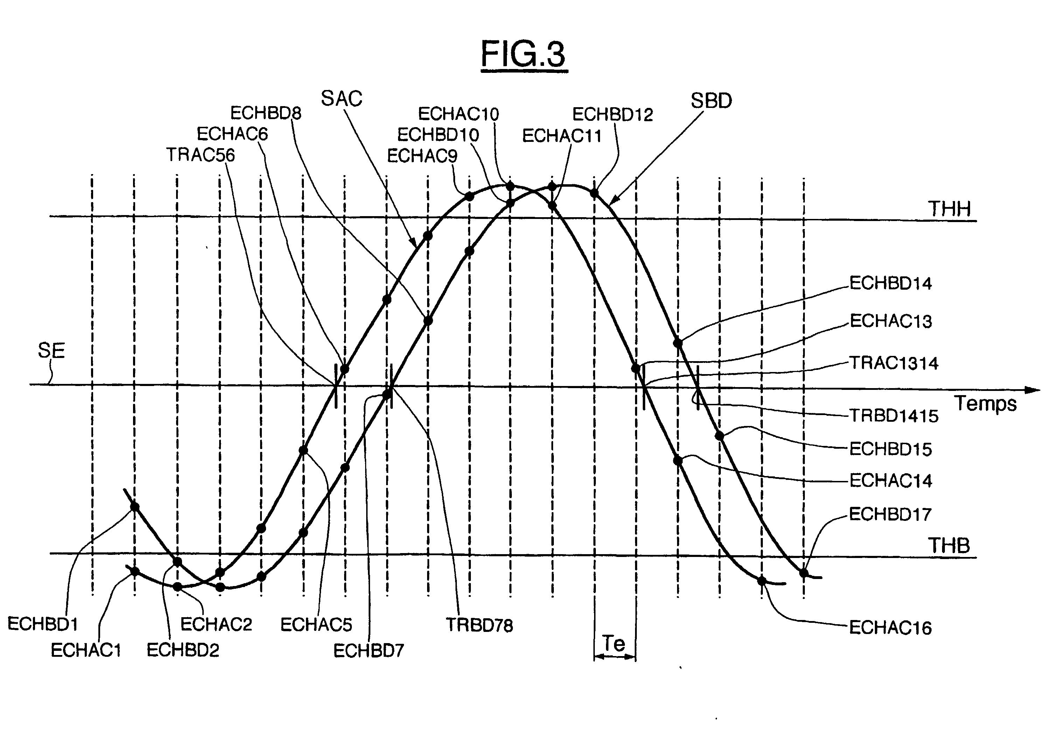

Sur la figure 3, on voit que les signaux SAC et SBD sont mutuellement déphasés. Par ailleurs, sur cette figure, les traits verticaux en tiretés espacés de la période d'échantillonnage Te représentent les différents fronts montants du signal d'horloge CKE au rythme desquels arrivent les échantillons des deux signaux SAC et SBD.

D'une façon générale, selon l'invention, les moyens de contrôle MCG ne vont initialiser le stockage des échantillons dans les éléments de mémorisation des blocs correspondants qu'en présence, soit de deux échantillons minimum, soit de deux échantillons maximum, pour les deux signaux incidents.

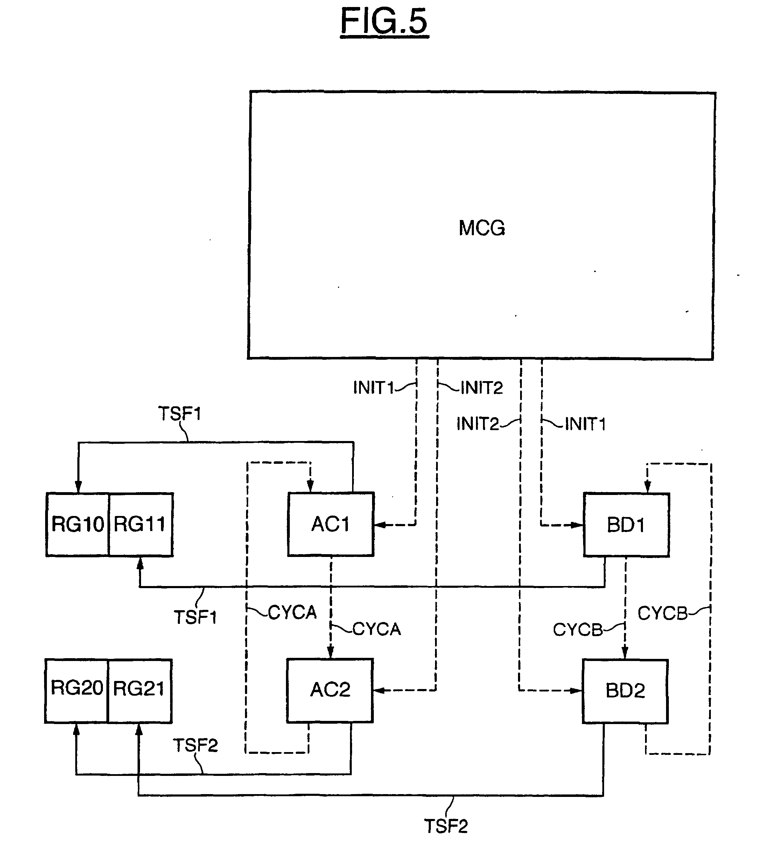

Plus particulièrement, comme illustré sur la figure 3, l'échantillon ECHAC1 du signal SAC est détecté comme étant un échantillon minimum. Par contre, au même instant, l'échantillon ECHBD1 du signal SBD n'est pas détecté comme étant un échantillon minimum. En conséquence, il n'y a pas initialisation du stockage dans les blocs. Par contre, au front montant du signal d'horloge, l'étage de détection MPD détecte un échantillon minimum pour le signal SBD, à savoir l'échantillon ECHBD2, et un échantillon minimum pour le signal SAC, à savoir l'échantillon ECHAC2. En conséquence, les moyens de contrôle MCG vont initialiser le stockage du jeu d'échantillons pour chaque signal incident dans les blocs AC1 et BD1, comme illustré par les flèches en tiretés INIT1 sur la figure 5, puisque ces blocs AC1 et BD1 sont dédiés aux configurations montantes des signaux. Bien entendu, si l'on avait été en présence de deux échantillons maximum pour les deux signaux, les moyens de contrôle MCG auraient initialiser le stockage dans les blocs AC2 et BD2, dédiés aux configurations descendantes des signaux, comme illustré par les flèches en tiretés INIT2 sur la figure 5.

Parallèlement au stockage de ces échantillons minimum, les compteurs CPTMIN sont initialisés à 0 par les moyens de contrôle MCG. Au front montant suivant, deux nouveaux échantillons minimum pour les deux signaux sont détectés. Ces deux échantillons minimum sont à leur tour stockés dans les éléments de mémorisation CHMIN des blocs AC1 et BD1 écrasant les anciennes valeurs des échantillons minimum précédemment stockés. De même, les compteurs CPTMIN sont à nouveau réinitialisés à 0. Au front montant suivant de l'horloge, le signal SAC franchit le seuil bas THB. Il n'y a donc plus d'échantillon minimum détecté. Par contre, il y a encore un échantillon minimum détecté pour le signal SBD qui est mémorisé dans l'élément de mémorisation CHMIN du bloc BD1, le compteur CPTMIN étant à nouveau initialisé à 0.

Au front montant suivant de l'horloge, il n'y a plus d'échantillon minimum détecté pour le signal SBD.

Au sixième front montant de l'horloge (le premier front montant étant supposé être le front montant associé aux échantillons ECHAC1 et ECHBD1), l'étage de détection MPD détecte un changement de signe de l'échantillon ECHAC6 par rapport à l'échantillon ECHAC5. Ces deux échantillons sont donc considérés comme deux échantillons intermédiaires représentatifs d'une transition du signal SAC, à savoir la transition TRAC56. Ces deux échantillons ECHAC5 et ECHAC6 sont donc respectivement stockés dans les éléments de mémorisation CHPMIN1 et CHPMIN2 du bloc AC1. Parallèlement, lors du stockage de l'échantillon ECHAC6 par exemple, le compteur CPTMIN1 est initialisé à 0.

D'une façon analogue, les échantillons intermédiaires ECHBD7 et ECHBD8 sont représentatifs de la transition TRBD78 du signal SBD. Ils sont donc respectivement stockés dans les éléments de mémorisation CHPMIN1 et CHPMIN2 du bloc BD1. Parallèlement, le compteur CPTMIN1 du bloc BD1 est initialisé à 0 lors du stockage de l'échantillon ECHBD8.

Au neuvième front montant de l'horloge, un échantillon maximum ECHAC9 est détecté pour le signal SAC et cet échantillon maximum est stocké dans l'élément de mémorisation CHMAX2 du bloc AC1, le compteur CPTMAX du bloc AC1 étant à son tour initialisé à 0.

A cet instant, le signal de validation de bloc VCEL prend la valeur 1 puisque la cellule de mémorisation du bloc AC1 a stocké au moins un échantillon minimum, un échantillon maximum et deux échantillons intermédiaires représentatifs d'une transition. Par contre, à ce neuvième front montant d'horloge, le signal VCEL du bloc BD1 est toujours à 0.

On voit sur l'exemple de la figure 3, que l'échantillon maximum ECHAC9 est suivi, pour le signal incident SAC, de deux autres échantillons maximum ECHAC10 et ECHAC11. Cependant, dans certains cas, l'échantillon suivant le signal ECHAC9 pourrait être un échantillon se situant en dessous du seuil haut THH. Aussi, afin de permettre au bloc AC2 de mémoriser toujours un échantillon maximum, il est préférable dans certaines applications, lorsque le signal VCEL du bloc AC1 prend la valeur 1, de dupliquer la valeur contenue dans l'élément de mémorisation CHMAX du bloc AC1, dans l'élément de mémorisation CHMAX du bloc AC2.

Le stockage du jeu suivant d'échantillons concernant le signal SAC se poursuit, d'une façon analogue à celle qui a été décrite ci-avant, dans les éléments de mémorisation du bloc AC2. Dans le cas présent, c'est finalement l'échantillon ECHAC11 qui sera stocké en tant qu'échantillon maximum dans l'élément de mémorisation CHMAX, provoquant l'initialisation du compteur CPTMAX. Les échantillons intermédiaires ECHAC13 et ECHAC14, représentatifs de la transition TRAC1314, seront stockés dans les éléments de mémorisation CHPMIN1 et CHPMIN2, tandis que l'échantillon minimum ECHAC16 sera stocké dans l'élément de mémorisation CHMIN.

Le jeu suivant d'échantillons, représentatif d'une autre configuration montante du signal SAC, sera à son tour stocké dans le bloc AC1 respectant ainsi le cycle de stockage CYCA illustré en tiretés sur la figure 5.

Si l'on revient maintenant au front montant n°10 du signal d'horloge, il y a stockage de l'échantillon maximum ECHBD10 du signal SBD dans l'élément de mémorisation CHMAX du bloc BD1, provoquant notamment la montée à "1" du signal VCEL associée à ce bloc BD1.

Puisqu'à ce moment-là les deux blocs sont validés, les moyens de contrôle délivrent alors aux deux blocs homologues AC1 et BD1 des signaux de transfert respectifs STAC1, STBD1 (figure 2), en réponse auxquels ils transfèrent le contenu du bloc AC1 dans le registre RG10 et le contenu du bloc BD1 dans le registre RG11 (flèches TSF1 sur la figure 5).

Le cycle de stockage du signal SBD se poursuit dans le bloc BD2, d'une façon analogue à celle qui a été décrite ci-avant pour le bloc AC2. Plus précisément, les échantillons ECHBD12, ECHBD14, ECHBD15 et ECHBD17 seront respectivement stockés dans les éléments de mémorisation CHMAX, CHPMIN1, CHPMIN2 et CHMIN du bloc BD2. Les deux échantillons ECHBD 14 et ECHBD15 sont représentatifs de la transition TRBD1415.

Le cycle de stockage CYCB, illustré en tiretés sur la figure 5, relatif aux blocs BD1 et BD2, se poursuit donc et ce d'une façon totalement indépendante du cycle de stockage CYCA relatif aux blocs AC1 et AC2.

Par ailleurs, d'une façon analogue au transfert TSF1 (figure 5) qui s'effectue entre les blocs AC1 et BD1 et les registres RG10 et RG11 lorsque les deux blocs AC1 et BD1 sont validés (signaux VCEL égaux à 1 pour ces deux blocs), il y a également transfert TSF2 des blocs AC2 et BD2 dans les registres RG20 et RG21 lorsque les deux blocs AC2 et BD2 sont validés (signaux VCEL égaux à 1).

Des moyens de post-traitement MPST déterminent alors le déphasage mutuel entre les deux signaux SAC et SBD à partir, du contenu des registres RG10 et RG11 pour les transitions "montantes", et du contenu des registres RG20 et RG21 pour les transitions "descendantes".

Si l'on revient maintenant au cas illustré sur la figure 3, et si l'on suppose que les échantillons ECHAC5, ECHAC6 ainsi que la valeur correspondante du compteur temporel CPTMIN1 (figée lors du transfert) ont été stockés dans le registre RG10, et que les échantillons ECHBD7, ECHBD8 et la valeur du compteur CPTMIN1 du bloc BD1 (figée lors du transfert) ont été stockés dans le registre RG11, les moyens de post-traitement déterminent l'écart temporel de la transition TRAC56 par rapport par exemple au front montant n°5 par interpolation linéaire par exemple. Ils déterminent également l'écart temporel de la transition TRBD78 par rapport au front montant n°7 par interpolation linéaire à partir des valeurs des échantillons ECHBD7 et ECHBD8. L'écart temporel entre les transitions TRAC56 et TRBD78, c'est-à-dire le déphasage mutuel des deux signaux, peut alors aisément être déterminé compte tenu notamment de la connaissance de la valeur de la période d'échantillonnage Te.

Les différentes valeurs calculées des écarts temporels peuvent avantageusement être délivrées à un filtre interpolateur connu en soi, permettant de délivrer de façon régulière des valeurs de déphasage représentatives de l'erreur de positionnement TE.

L'homme du métier aura noté par ailleurs que cette détermination du déphasage peut se faire en temps différé par rapport au cycle de stockage dans les blocs, et ce notamment puisque les valeurs des compteurs ont été figées lors des transferts dans les registres.

Les moyens de post-traitement peuvent également procéder avantageusement à un contrôle de la validité du calcul de déphasage en comparant les valeurs du compteur CPTMAX associé à l'un des signaux avec la valeur du compteur CPTMIN associé à l'autre signal. Plus précisément, on voit notamment sur la figure 3, en ce qui concerne les configurations montantes des deux signaux SAC et SBD, que la valeur du compteur CPTMAX du bloc AC1, associé au signal SAC, doit être inférieure à la valeur du compteur CPTMIN du bloc BD1 associé au signal SBD. Dans le cas d'une configuration descendante, le compteur CPTMAX relatif au signal SAC devra être supérieur au compteur CPTMIN relatif au signal SBD. Une non satisfaction de ces inéquations signifierait que l'on était en présence d'un déphasage trop important des signaux, par exemple des signaux en opposition de phase, ce qui pourrait conduire à des erreurs dans le calcul des déphasages.

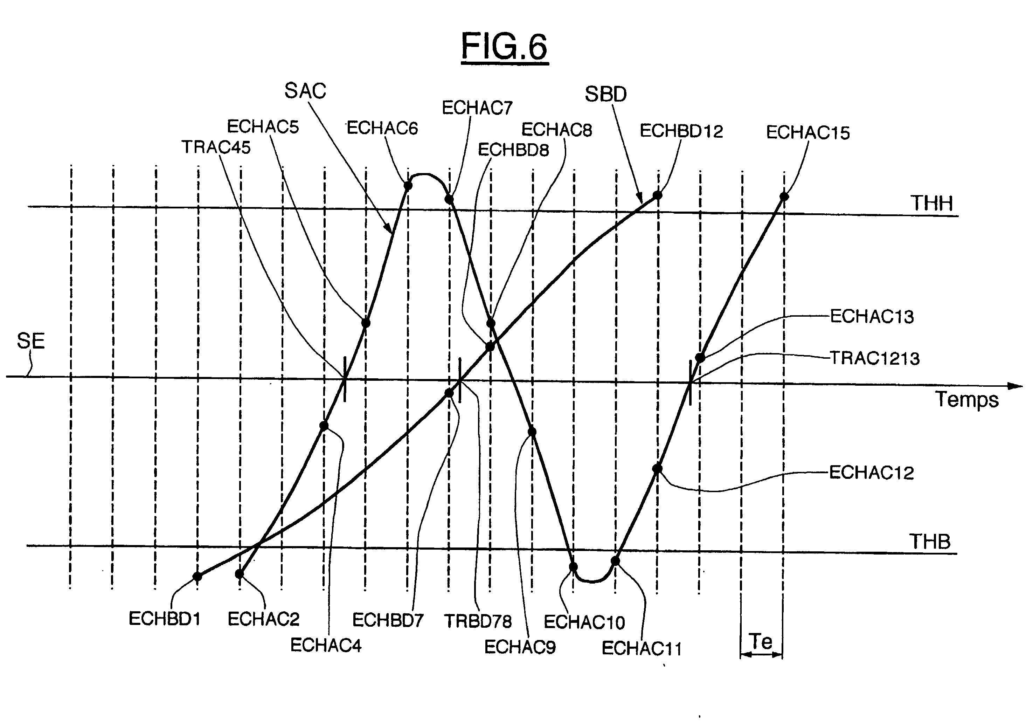

La combinaison de l'initialisation du stockage selon l'invention qui vient d'être décrite ci-avant, avec l'autorisation du calcul du déphasage uniquement en présence de deux signaux de validation de blocs homologues, permet en outre notamment de prendre en compte des évolutions de signaux tels que ceux illustrés sur la figure 6.

En effet, sur cette figure 6, les échantillons ECHAC2, ECHAC4, ECHAC5 et ECHAC6 vont être respectivement stockés dans le bloc AC1. Parallèlement, les échantillons ECHBD1, ECHBD7, ECHBD8 et ECHBD12 vont être stockés dans le bloc BD1. Cependant, compte tenu de l'évolution du signal SAC, le bloc AC1 sera validé avant le bloc BD1 lors de l'apparition de l'échantillon ECHAC6. Mais, puisque le bloc BD1 ne sera pas validé à cet instant, il n'y aura pas calcul du déphasage à partir du contenu des deuxblocs AC1 et BD1. Le cycle de stockage du signal SAC se poursuivra alors dans le bloc AC2, c'est-à-dire que les éléments de mémorisation correspondants de ce bloc vont recevoir les échantillons ECHAC7, ECHAC8, ECHAC9 et ECHAC10. Lors de l'apparition de l'échantillon ECHAC10, le bloc BD1 ne sera toujours pas validé. La configuration montante suivante du signal SAC (échantillons ECHAC11, ECHAC12, ECHAC13 et ECHAC15) va être stockée dans le bloc AC1. Et, c'est seulement lors de l'apparition de l'échantillon ECHAC15 que l'on sera en présence de deux blocs homologues validés, à savoir les blocs BD1 et AC1. Le calcul du déphasage entre les deux signaux s'effectuera donc à partir du contenu de ces deux blocs, c'est-à-dire à partir des transitions TRBD78 et TRAC 1213 et non à partir des transitions TRAC45 et TRBD78.

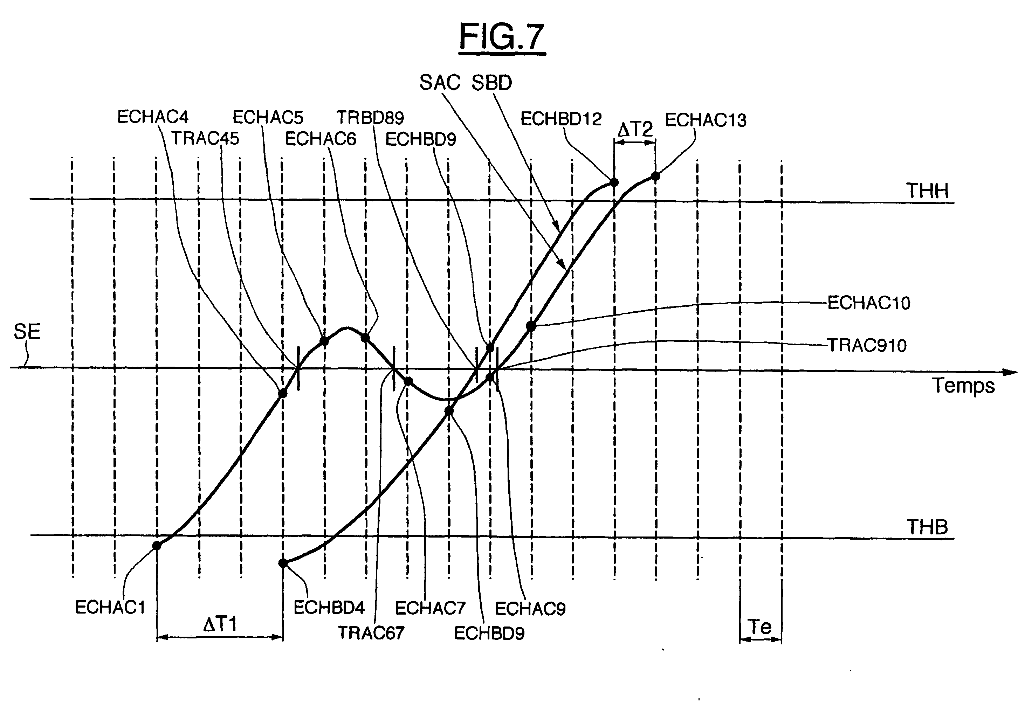

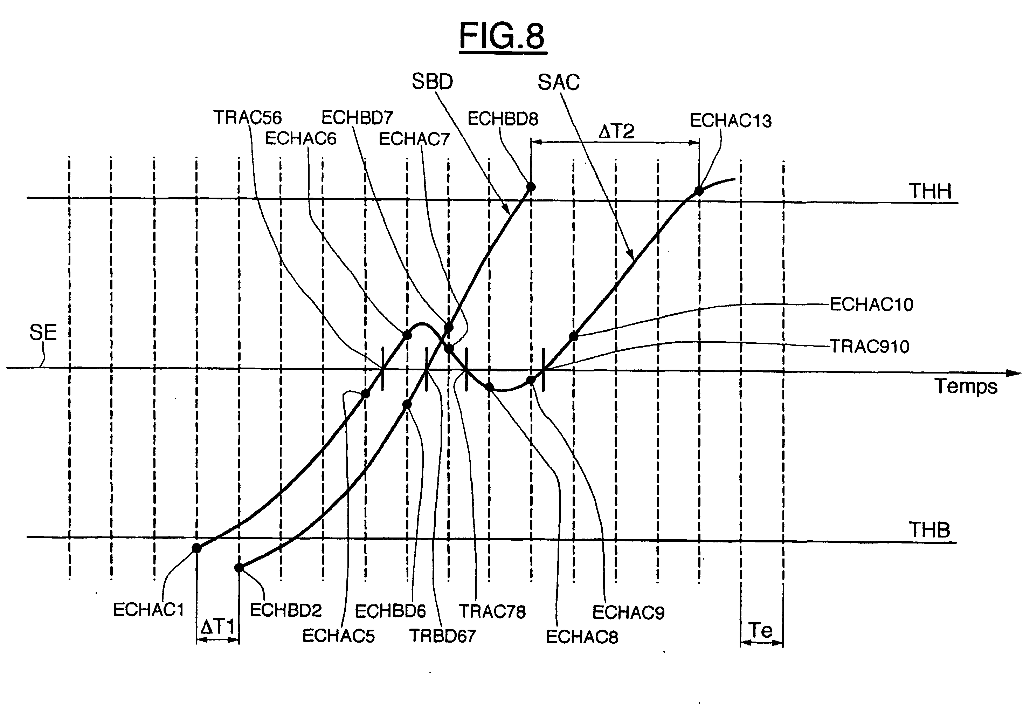

Le dispositif de calcul selon l'invention permet également de prendre en compte des oscillations de l'un et/ou de l'autre des signaux incidents entre les seuils bas et haut, comme illustré par exemple sur les figures 7 et 8.

Sur la figure 7, on suppose que le signal SAC subit une oscillation autour du seuil SE entre les échantillons ECHAC1 et ECHAC13. Les échantillons intermédiaires ECHAC4 et ECHAC5 vont être stockés dans les éléments de mémorisation CHPMIN1 et CHPMIN2. Les échantillons intermédiaires supplémentaires ECHAC6 et ECHAC7 représentatifs d'une transition supplémentaire vont être stockés dans les éléments de mémorisation CHPMAX1 et CHPMAX2, le compteur CPTMAX2 étant initialisé par exemple lors du stockage de l'échantillon intermédiaire supplémentaire ECHAC7. Lors de l'apparition de la dernière transition TRAC910 du signal SAC, représentée par les échantillons intermédiaires supplémentaires ECHAC9 et ECHAC10, ce sont ces échantillons supplémentaires intermédiaires ECHAC9 et ECHAC10 qui vont être à leur tour stockés dans les éléments de mémorisation CHPMAX1 et CHPMAX2, provoquant à nouveau l'initialisation du compteur CPTMAX2.

Parallèlement, le stockage du jeu d'échantillons du signal SBD s'effectue dans le bloc BD 1. Lors de l'apparition de l'échantillon ECHC13, les deux blocs AC1 et BD1 sont déclarés valides. Il y a transfert dans les registres RG10 et RG11. Les moyens de post-traitement MPST vont alors noter que le signal VPH est monté à 1, traduisant la présence d'une transition initiale TRAC45 et d'une transition finale TRAC910 pour le signal SAC. Dans ce cas, les moyens de post-traitemnt vont sélectionner, entre ces deux transitions, celle qui sera utilisée pour le calcul du déphasage en combinaison avec la transition TRBD89 du signal SBD, en fonction d'un critère de sélection qui est le rapport ΔT2/ΔT1 entre la différence des compteurs CPTMAX des deux blocs et la différence des compteurs CPTMIN des deux blocs. Si ΔT2/ΔT1 est par exemple inférieur à 2/3, les moyens de post-traitement MPST utiliseront la transition TRAC910. Par contre, si ce rapport est supérieur à 3/2, comme illustré sur la figure 8, les moyens de post-traitement utiliseront la transition TRAC56 du signal SAC et non pas la transition TRAC910 pour le calcul du déphasage avec la transition TRBD67 du signal SBD.

## Revendications

1. Dispositif électronique de calcul du déphasage mutuel de deux signaux incidents échantillonnés, **caractérisé par le fait qu'**il comprend
une première paire de blocs (AC1, AC2) associés à un premier signal incident (SAC), et une deuxième paire de blocs (BD1, BD2) associés au deuxième signal incident (SBD), chaque bloc comportant des éléments de mémorisation aptes à stocker les niveaux d'un jeu prédéterminé d'échantillons du signal incident correspondant,
des moyens de contrôle (MCG) aptes, en présence de deux échantillons dits "minimum" ,dont les niveaux sont inférieurs à un seuil bas (THB),ou de deux échantillons dits "maximum", dont les niveaux sont supérieurs à un seuil haut (THH), et respectivement relatifs aux deux signaux incidents, à stocker le premier jeu d'échantillons relatifs au premier signal (SAC) dans l'un des blocs (AC1) de la première paire et le premier jeu d'échantillons relatifs au deuxième signal (SBD) dans le bloc homologue (BD1) de la deuxième paire, puis à stocker les jeux suivants successifs d'échantillons de chaque signal incident alternativement et successivement dans les deux blocs de chaque paire en commençant par l'autre bloc (AC2, BD2) de chaque paire, et à délivrer un signal de validation de bloc (VCEL=1) lorsque le jeu correspondant d'échantillons a été totalement stocké dans les éléments de mémorisation du bloc, et
des moyens de post-traitement (MPST) aptes à déterminer le déphasage des deux signaux incidents en présence de deux signaux de validation de bloc relatifs à deux blocs homologues des deux paires, à partir du contenu de ces blocs.

2. Dispositif selon la revendication 1, **caractérisé par le fait qu'**il comprend un étage de détection (MPD) apte à déctecter, outre lesdits échantillons minimum et maximum de chaque signal incident, les transitions de chaque signal incident par rapport à un seuil de franchissement prédéterminé (SE), **par le fait que** ledit jeu prédéterminé d'échantillons du signal incident correspondant comporte au moins un échantillon minimum (MINAC), un échantillon maximum (MAXAC), et deux échantillons intermédiaires (PMNAC1, PMNAC2) représentatifs d'une transition dudit signal incident temporellement située entre ces échantillons minimum et maximum, **par le fait que** chaque bloc comporte en outre des premier, deuxième et troisième compteurs temporels (CPTMIN, CPTMAX, CPTMIN1) cadencés par le signal d'horloge d'échantillonnage (CKE) et respectivement associés aux échantillons minimum, maximum et à l'un des échantillons intermédiaires,**par le fait que** les moyens de contrôle (MCG) sont également aptes, en présence de deux échantillons minimum ou de deux échantillons maximum respectivement relatifs aux deux signaux incidents,à initialiser le compteur temporel associé à l'échantillon stocké, et **par le fait que** les moyens de post-traitement (MPST) sont aptes à déterminer le déphasage des deux signaux incidents au moins à partir des valeurs des troisièmes compteurs temporels de ces deux blocs et des niveaux des échantillons intermédiaires stockés dans ces deux blocs.

3. Dispositif selon la revendication 2, **caractérisé par le fait que** les moyens de post-traitement comportent des moyens de stockage (RG10, RG11, RG20, RG21), **par le fait qu'**en présence de deux signaux de validation de bloc relatifs à deux blocs homologues des deux paires, les moyens de contrôle (MCG) transfèrent le contenu des deux blocs homologues dans les moyens de stockage, les moyens de post-traitement déterminant le déphasage à partir du contenu des moyens de stockage.

4. Dispositif selon la revendication 2 ou 3, **caractérisé par le fait que** les moyens de post-traitement (MPST) effectuent un contrôle de validité du calcul du déphasage comportant une comparaison entre la valeur du premier compteur temporel de l'un des blocs et la valeur du deuxième compteur temporel de l'autre bloc.

5. Dispositif selon l'une des revendications 2 à 4, **caractérisé par le fait que** les deux échantillons intermédiaires de chaque jeu sont représentatifs de la première transition apparaissant entre les échantillons minimum et maximum du jeu, **par le fait que** chaque bloc comporte deux éléments de mémorisation supplémentaires (CHPMAX1, CHPMAX2) aptes à stocker le cas échéant une paire d'échantillons intermédiaires supplémentaires représentatifs d'une transition finale dudit signal incident située entre les échantillons minimum et maximum, **par le fait que** chaque bloc comporte un quatrième compteur temporel (CPTMAX2) associé à l'un de ces échantillons intermédiaires supplémentaires, et **par le fait que** les moyens de post-traitement utilisent, pour calculer le déphasage entre les deux signaux incidents, soit la valeur du troisième compteur temporel associée à la paire d'échantillons intermédiaires, soit la valeur du quatrième compteur temporel associée à la paire d'échantillons intermédiaires supplémentaires, en fonction du rapport entre d'une part la différence (ΔT1) entre les valeurs des premiers compteurs temporels associés aux deux blocs homologues, et d'autre part différence (ΔT2) entre les valeurs des deuxièmes compteurs temporels associés aux deux blocs homologues.

6. Lecteur de disque numérique, en particulier de disque DVD, comprenant une tête optique comportant un moyen d'émission d'un faisceau lumineux incident et plusieurs photodétecteurs (PHD) pour détecter la réflexion du faisceau lumineux sur le disque, des moyens pour sommer deux à deux les signaux issus des photodétecteurs et délivrer deux signaux incidents échantillonnés (SAC, SBD), et des moyens (ET2) de calcul du déphasage mutuel des deux signaux incidents échantillonnés, **caractérisé par le fait que** les moyens de calcul (ET2) incorporent un dispositif tel que défini dans l'une des revendications 1 à 5.

## Patentansprüche

1. Elektronische Vorrichtung zur Berechnung der gegenseitigen Phasenabweichung zwischen zwei abgetasteten Fehlersignalen, **dadurch gekennzeichnet, daß** sie aufweist:
ein erstes Paar von Blöcken (AC1, AC2), die mit einem ersten Fehlersignal (SAC) verknüpft sind, und ein zweites Paar von Blöcken (BD1,BD2), die mit einem zweiten Fehlersignal (SBD) verknüpft sind, wobei jeder Block Speicherelemente aufweist, die in der Lage sind, die Pegel eines vorgegebenen Satzes von Abtastwerten des entsprechenden Fehlersignals zu speichern,
Steuereinrichtungen (MCG), die in der Lage sind, bei Anwesenheit von zwei sogenannten "minimalen" Abtastwerten, deren Pegel unterhalb einer unteren Schwelle (THB) sind, oder von zwei sogenannten "maximalen" Abtastwerten, deren Pegel oberhalb einer oberen Schwelle (THH) sind, und jeweils zu den zwei Fehlersignalen gehören, den ersten Satz von Abtastwerten, die zum ersten Signal (SAC) gehören, in einem der Blöcke (AC1) des ersten Paars und den ersten Satz von Abtastwerten, die zum zweiten Signal (SBD) gehören, im homologen Block (BD1) des zweiten Paars zu speichern, dann die nacheinander folgenden Sätze von Abtastwerten jedes Fehlersignals abwechselnd und nacheinander in den zwei Blöcken jedes Paars zu speichern, beginnend mit dem anderen Block (AC2,BD2) jedes Paars, und ein Blockgültigkeitssignal (VCEL=1) auszugeben, wenn der entsprechende Satz von Abtastwerten vollständig in den Speicherelementen des Blocks gespeichert worden ist, und
Nachbearbeitungseinrichtungen (MPST), die in der Lage sind, bei Anwesenheit von zwei Blockgültigkeitssignalen, die zu zwei homologen Blöcken der zwei Paare gehören, aus dem Inhalt dieser Blöcke die Phasenabweichung zwischen den zwei Fehlersignalen zu bestimmen.

2. Vorrichtung nach Anspruch 1, **dadurch gekennzeichnet, daß** sie eine Detektionsstufe (MPD) aufweist, die in der Lage ist, außer den minimalen und maximalen Abtastwerten jedes Fehlersignals die Übergänge jedes Fehlersignals über eine vorgegebene Überschreitungsschwelle (SE) zu erfassen, dadurch, daß der vorgegebene Satz von Abtastwerten des entsprechenden Fehlersignals mindestens einen minimalen Abtastwert (MINAC), einen maximalen Abtastwert (MAXAC) und zwei zwischenliegende Abtastwerte (PMNAC1,PMNAC2) aufweist, die einen Übergang des Fehlersignals repräsentieren, der zeitlich zwischen dem minimalen und maximalen Abtastwert liegt, dadurch, daß jeder Block ferner einen ersten, zweiten und dritten Zeitzähler (CPTMIN, CPTMAX, CPTMIN1) aufweist, die von dem Abtasttaktsignal (CKE) getaktet werden und jeweils mit dem minimalen, maximalen und einem der zwischenliegenden Abtastwerte verknüpft sind, dadurch, daß die Steuereinrichtungen (MCG) auch in der Lage sind, bei Anwesenheit von zwei minimalen Abtastwerten oder von zwei maximalen Abtastwerten, die jeweils zu den zwei Fehlersignalen gehören, den Zeitzähler zu initialisieren, der mit dem gespeicherten Abtastwert verknüpft ist, und dadurch, daß die Nachbearbeitungseinrichtungen (MPST) in der Lage sind, die Phasenabweichung zwischen den zwei Fehlersignalen mindestens aus den Werten der dritten Zeitzähler dieser zwei Blöcke und den Pegeln der in diesen zwei Blöcken gespeicherten zwischenliegenden Abtastwerte zu bestimmen.

3. Vorrichtung nach Anspruch 2, **dadurch gekennzeichnet, daß** die Nachbearbeitungseinrichtungen Speichereinrichtungen (RG10, RG11, RG20, RG21) aufweisen, dadurch, daß bei Anwesenheit von zwei Blockgültigkeitssignalen, die zu zwei homologen Blöcken der zwei Paare gehören, die Steuereinrichtungen (MCG) den Inhalt der zwei homologen Blöcke in die Speichereinrichtungen übertragen, wobei die Nachbearbeitungseinrichtungen aus dem Inhalt der Speichereinrichtungen die Phasenabweichung bestimmen.

4. Vorrichtung nach Anspruch 2 oder 3, **dadurch gekennzeichnet, daß** die Nachbearbeitungseinrichtungen (MPST) eine Prüfung der Gültigkeit der Berechnung der Phasenabweichung ausführen, die einen Vergleich zwischen dem Wert des ersten Zeitzählers des einen Blocks und dem Wert des zweiten Zeitzählers des anderen Blocks beinhaltet.

5. Vorrichtung nach einem der Ansprüche 2 bis 4, **dadurch gekennzeichnet, daß** die zwei zwischenliegenden Abtastwerte jedes Satzes den ersten Übergang repräsentieren, der zwischen dem minimalen und dem maximalen Abtastwert des Satzes auftritt, dadurch, daß jeder Block zwei zusätzliche Speicherelemente (CHPMAX1, CHPMAX2) aufweist, die in der Lage sind, gegebenenfalls ein Paar von zusätzlichen zwischenliegenden Abtastwerten zu speichern, die einen letzten Übergang des Fehlersignals repräsentieren, der zwischen dem minimalen und maximalen Abtastwert liegt, und dadurch, daß jeder Block einen vierten Zeitzähler (CPTMAX2) aufweist, der mit einem dieser zusätzlichen zwischenliegenden Abtastwerte verknüpft ist, und dadurch, daß zur Berechnung der Phasenabweichung zwischen den zwei Fehlersignalen die Nachbearbeitungseinrichtungen entweder den Wert des dritten Zeitzählers, der mit dem Paar von zwischenliegenden Abtastwerten verknüpft ist, oder den Wert des vierten Zeitzählers, der mit dem Paar von zusätzlichen zwischenliegenden Abtastwerten verknüpft ist, als Funktion des Verhältnisses zwischen einerseits der Differenz (ΔT1) zwischen den Werten der mit zwei homologen Blöcken verknüpften ersten Zeitzähler und andererseits der Differenz (ΔT2) zwischen den Werten der mit zwei homologen Blöcken verknüpften zweiten Zeitzähler verwenden.

6. Leser für digitale Platten, insbesondere DVD-Platten, mit einem optischen Kopf, der aufweist: Einrichtungen zum Aussenden eines Fehlerlichtbündels und mehrere Photodetektoren (PHD), um die Reflexion des Lichtbündels an der Platte zu erfassen, Einrichtungen zum paarweisen Summieren der von den Photodetektoren ausgegebenen Signale und zur Ausgabe zweier abgetasteter Fehlersignale (SAC, SBD) und Einrichtungen (ET2) zum Berechnen der gegenseitigen Phasenabweichung zwischen den zwei abgetasteten Fehlersignalen, **dadurch gekennzeichnet, daß** die Berechnungseinrichtungen (ET2) eine Vorrichtung aufweisen, wie sie in einem der Ansprüche 1 bis 5 definiert ist.

## Claims

1. Electronic device for calculating the mutual phase shift of two sampled incident signals, **characterized in that** it comprises
a first pair of blocks (AC1, AC2) associated with a first incident signal (SAC), and a second pair of blocks (BD1, BD2) associated with the second incident signal (SBD), each block comprising storage elements able to store the levels of a predetermined set of samples of the corresponding incident signal,
checking means (MCG) able, in the presence of two so-called "minimum" samples, whose levels are less than a low threshold (THB), or of two so-called "maximum" samples, whose levels are greater than a high threshold (THH), and respectively relating to the two incident signals, to store the first set of samples relating to the first signal (SAC) in one of the blocks (AC1) of the first pair and the first set of samples relating to the second signal (SBD) in the counterpart block (BD1) of the second pair, then to store the successive following sets of samples of each incident signal alternately and successively in the two blocks of each pair, beginning with the other block (AC2, BD2) of each pair, and to deliver a block validation signal (VCEL=1) when the corresponding set of samples has been completely stored in the storage elements of the block, and
post-processing means (MPST) able to determine the phase shift of the two incident signals in the presence of two block validation signals relating to two counterpart blocks of the two pairs, on the basis of the content of these blocks.

2. Device according to Claim 1, **characterized in that** it comprises a detection stage (MPD) able to detect, apart from the said minimum and maximum samples of each incident signal, the transitions of each incident signal with respect to a predetermined overstepping threshold (SE), **in that** the said predetermined set of samples of the corresponding incident signal comprises at least one minimum sample (MINAC), one maximum sample (MAXAC), and two intermediate samples (PMNAC1, PMNAC2) representative of a transition of the said incident signal, which transition is situated temporally between these minimum and maximum samples, **in that** each block furthermore comprises first, second and third temporal counters (CPTMIN, CPTMAX, CPTMIN1) regulated by the sampling clock signal (CKE) and respectively associated with the minimum and maximum samples and with one of the intermediate samples, **in that** the checking means (MCG) are also able, in the presence of two minimum samples or of two maximum samples respectively relating to the two incident signals, to initialize the temporal counter associated with the stored sample, and **in that** the post-processing means (MPST) are able to determine the phase shift of the two incident signals at least on the basis of the values of the third temporal counters of these two blocks and of the levels of the intermediate samples stored in these two blocks.

3. Device according to Claim 2, **characterized in that** the post-processing means comprise storage means (RG10, RG11, RG20, RG21), **in that** in the presence of two block validation signals relating to two counterpart blocks of the two pairs, the checking means (MCG) transfer the content of the two counterpart blocks into the storage means, the post-processing means determining the phase shift on the basis of the content of the storage means.

4. Device according to Claim 2 or 3, **characterized in that** the post-processing means (MPST) perform a check of the validity of the calculation of the phase shift comprising a comparison between the value of the first temporal counter of one of the blocks and the value of the second temporal counter of the other block.

5. Device according to one of Claims 2 to 4, **characterized in that** the two intermediate samples of each set are representative of the first transition appearing between the minimum and maximum samples of the set, **in that** each block comprises two additional storage elements (CHPMAX1, CHPMAX2) able to store as appropriate a pair of additional intermediate samples representative of a final transition of the said incident signal, which transition is situated between the minimum and maximum samples, **in that** each block comprises a fourth temporal counter (CPTMAX2) associated with one of these additional intermediate samples, and **in that** the post-processing means use, to calculate the phase shift between the two incident signals, either the value of the third temporal counter, associated with the pair of intermediate samples, or the value of the fourth temporal counter, associated with the pair of additional intermediate samples, as a function of the ratio between on the one hand the difference (ΔT1) between the values of the first temporal counters associated with the two counterpart blocks, and on the other hand the difference (ΔT2) between the values of the second temporal counters associated with the two counterpart blocks.

6. Digital disc reader, in particular DVD disc reader, comprising an optical head comprising a means of emitting an incident light beam and several photodetectors (PHD) for detecting the reflection of the light beam off the disc, means for summing, pairwise, the signals emanating from the photodetectors and for delivering two sampled incident signals (SAC, SBD), and means (ET2) for calculating the mutual phase shift of the two sampled incident signals, **characterized in that** the calculating means (ET2) incorporate a device as defined in one of Claims 1 to 5.
